# EUROPEAN PATENT SPECIFICATION

(11) **EP 0 526 507 B1**
(45) Date of publication and mention of the grant of the patent: **09.08.1995**
(21) Application number: 91908039.0
(22) Date of filing: 23.04.1991
(51) Int. Cl.: F16D 27/112

(54) **ELECTROMAGNETIC CLUTCH WITH IMPROVED ROTOR**
ROTORKONSTRUKTION IN ELEKTROMAGNETISCHER KUPPLUNG
EMBRAYAGE ELECTROMAGNETIQUE A ROTOR AMELIORE

(30) Priority: 24.04.1990 US 513630; 09.04.1991 US 682462
(43) Date of publication of application: 10.02.1993
(73) Proprietor: TESMA INTERNATIONAL INC., Concord, Ontario L4K 3Y3 (CA)
(72) Inventor: CERNY, Zdenek, Brampton, Ontario L6T 3X8 (CA)
(74) Representative: Laight, Martin Harvey
(86) International application number: CA9100135
(87) International publication number: WO9116552

(56) References cited:
- US-A- 2 919 777
- US-A- 3 082 933
- US-A- 3 149 705
- US-A- 3 205 989
- US-A- 3 724 621
- US-A- 4 301 906

## Description

### ELECTROMAGNETIC CLUTCH WITH IMPROVED ROTOR

This invention relates to clutches and, more particularly, to improvements in electromagnetic clutches.

Electromagnetic clutches are well known and have been utilized commercially in automobiles for a number of years. A typical electromagnetic clutch includes a rotor which generally comprises an inner annular bearing portion, a clutch porticn extending generally radially outwardly from one end of the inner portion, and an outer annular portion extending from the clutch portion in generally overlying spaced relation with respect to the inner portion. The spacing between the inner and outer annular portions receives the fixed electromagnetic coil therebetween which is energized to create the flux field in the rotor. The clutch portion includes a series of arcuate slots sometimes referred to as banana slots and cooperates with an armature plate which itself has cooperating arcuate slots therein. The purpose of the arcuate slots is to direct the flux field back and forth between the armature plate and clutch portion of the rotor which, in turn, is a measure of the efficiency of the magnetic attraction between the armature plate and the rotor. Examples of known electromagnetic clutches are disclosed in JP-A-58 128537 (Kobayashi), US-A-3082933 (Bernard), and US-A-2919777 (Walter).

Heretofore, the inner and outer series of arcuate slots in the rotor have been formed straight through the clutch portion. The present invention is based upon the principle that the torque-transmitting capability of a rotor can be increased by modifying the construction of the inner and, preferably, outer series of arcuate slots from end to end so as to enable the magnetic flux path to be extended between the rotor and the armature plate to a greater inner extent along the inner areas of the crossing path and, preferably, to a greater outer extent along the outer crossing path.

According to the present invention there is provided an electromagnetic clutch comprising a rotor rotatable about a rotational axis, an armature operable to be magnetically coupled with said rotor for rotation therewith, and a fixed annular magnetic coil energizable to magnetically couple said rotor and armature, said rotor including an inner annular portion, an annular clutch portion extending outwardly from an end of said inner annular portion and an outer annular portion extending from an outer end of said clutch portion, said annular clutch portion including rotor coupling surface means and a series of arcuate slots extending from said coupling surface means through said annular clutch portion, said armature including an armature plate having armature coupling surface means for engaging said rotor coupling surface means and a series of arcuate slots positioned in cooperating relation with respect to the series of arcuate slots of said rotor clutch portion so as to establish a magnetic flux path which passes back and forth between said rotor clutch portion and said armature plate a plurality of times, said inner and outer annular portions including opposed spaced annular surface means for receiving said annular magnetic coil therebetween so that when said magnetic coil is energized a magnetic flux field is established within magnetic flux paths within said inner and outer annular rotor portions connecting with said magnetic flux path between said clutch portion and said armature plate, characterised in that said series of arcuate slots includes a plurality of radially inner annular spaced arcuate slots which extend through said annular clutch portion from a first position at the coupling surface means side thereof to a second position at an opposite side thereof in which said second position is disposed radially outwardly of said first position, the radially outermost extent of said inner arcuate slots at said first position being spaced radially from the opposed annular surface means of said inner annular portion a radial distance less than the radial distance between the radially outermost extent and radially innermost extent of said inner arcuate slots at said first position.

In some arrangements said plurality of radially inner annularly spaced arcuate slots may extend from the coupling surface means side of said annular clutch portion at said first position generally in a direction parallel to said rotational axis and then extend to the opposite side of said annular clutch portion at said second position in a direction with a component which is parallel to said rotational axis and a radially outward component.

Also it may be arranged that said series of arcuate slots includes a plurality of radially outer annularly spaced arcuate slots which extend from the coupling surface means side of said annular clutch portion at a first position and extend to an opposite side of said annular clutch portion at a second position spaced radially inwardly of said first position, the radial innermost extent of said outer arcuate slots at said first position being radially outwardly of the opposed annular surface means of said outer annular portion.

It may further be arranged that said outer annular portion extends from the outer end of said clutch portion in an axially outward and radially inward direction in coextensive relation therewith for a short distance and then extends axially in parallel relation with said inner annular portion.

Said rotor may be a one-piece casting of cast iron, and said cast iron may be ferritic ductile cast iron.

In some arrangements there may be provided an electromagnetic clutch assembly comprising an electromagnetic clutch according to the invention as defined above, a fixed structure of an automotive air conditioner compressor, a shaft extending therefrom rotatable about an axis, bearing means carried by the fixed structure and engaging an interior cylindrical surface of said annular portion for mounting said rotor for rotation about an axis coincident with the axis of the compressor shaft, said outer annular portion having an exterior annular drive surface configuration for drivingly cooperating with a driving element for effecting rotation of said rotor, said armature drivingly connecting with the compressor shaft operable to be magnetically coupled with said rotor for rotation therewith to drive the compressor shaft, said fixed annular magnetic coil being connected with the fixed structure of the compressor and energizable to magnetically couple said rotor and armature.

Said exterior annular drive surface configuration may be a poly-V configuration, which may be formed on an annular section fixed to the initial extent of said outer annular portion and extending axially in generally parallel relation to the axial extent of said outer annular portion. Alternatively, said exterior annular drive surface configuration may be a series of gear teeth.

Said rotor may include an integral grease-guard portion formed inwardly of the junction between said inner annular portion and said clutch portion and extending axially therefrom.

The series of arcuate slots may include a plurality of radially outer annularly spaced arcuate slots which extend in one direction inwardly from the coupling surface side of the annular clutch portion at a first position and extend outwardly to an opposite side of the annular clutch portion in a different direction at a second position spaced radially inwardly of the first position.

An embodiment of the invention will now be described by way of example with reference to the accompanying drawings wherein:-
Figure 1 is a vertical sectional view of an electromagnetic clutch constructed in accordance with the principles of the present invention;
Figure 2 is a sectional view taken along the line 2-2 of Figure 1;
Figure 3 is a sectional view taken along the line 3-3 of Figure 1;
Figure 4 is an upper half vertical sectional view of a modified form of rotor constructed in accordance with the principles of the present invention;
Figure 5 is a fragmentary righthand elevational view of the rotor shown in Figure 4;
Figure 6 is an view similar to Figure 4 showing still another configuration of rotor constructed in accordance with the principles of the present invention;
Figure 7 is a view similar to Figure 4 showing still another form of rotor constructed in accordance with the principles of the present invention;
Figure 8 is a view similar to Figure 4 showing still another form of rotor constructed in accordance with the principles of the present invention; and
Figure 9 is a view similar to Figure 4 showing another form of rotor, not constructed in accordance with the present invention, but illustrating features which may be used in an electromagnetic clutch.

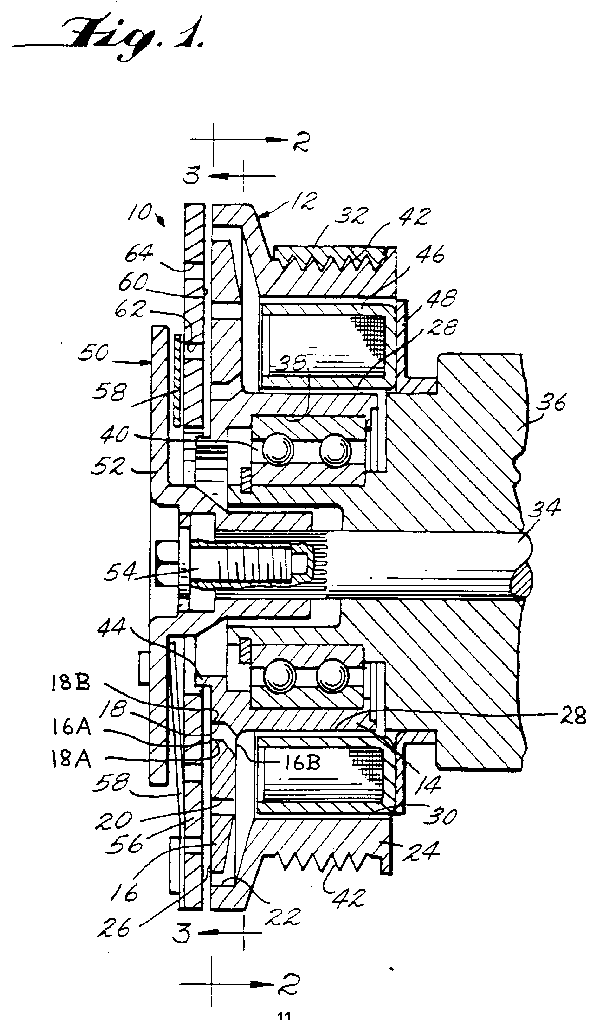

Referring now more particularly to Figure 1 of the drawings, there is shown therein an electromagnetic clutch, generally indicated at 10, which embodies the principles of the present invention. More specifically, the principles of the present invention are embodied in the configuration of a rotor, generally indicated at 12, and its cooperation with the other components of the clutch 10. It is preferred that the rotor 12 be made of ferritic cast iron in one piece in accordance with the method disclosed in copending application EP-A-0526505 (EP 91908029.1) filed concurrently herewith since the constructions herein taught can be easily achieved in this manner. Accordingly, the disclosure of aforesaid application is hereby incorporated by reference into the present specification. Nevertheless, in its broadest aspect, the present invention contemplates that the constructions can be achieved by other procedures utilizing other materials, as, for example, a two-piece welded steel construction or the like.

As shown in Figure 1, the rotor 12 includes an inner annular portion 14, an annular clutch portion 16 extending outwardly from an end of the inner annular portion 14 and having a series of inner, intermediate, and outer arcuate slots 18, 20, and 22 extending therethrough and an outer annular portion 24 extending from an outer end of the annular clutch portion 16. The clutch portion 16 has a coupling surface 26 which performs a clutch-coupling function in operation. The inner and outer annular portions 14 and 24 have opposed annular surfaces 28 and 30, which perform a magnetic flux field receiving function.

In addition to the surfaces required for the flux carrying and clutch coupling functions, the rotor 12 must also interface with other structure which effects its rotational mounting and driving connection. In its simplest form, this interface may simply be a fixed connection with a driven or driving shaft. The rotor 12 shown in Figure 1 is particularly configured for use in an electromagnetic clutch 19 connected to be driven by the serpentine belt 32 of an automotive serpentine accessory drive so as to selectively drive a compressor shaft 34 rotatably mounted within and extending outwardly from a compressor housing 36 of the compressor assembly of the accessory drive.

To this end, it will be noted that the inner portion 14 of the cast iron rotor 12 has an inner annular surface 38 finished so as to engage the outer race of a ball bearing assembly 40, the inner race of which is mounted on the fixed support provided by the compressor housing 36. The outer annular portion 24 of the rotor 12 has an outer poly-V surface configuration 42 so as to be drivingly engaged by the poly-V belt 32. As shown, the poly-V surface configuration 42 has an exterior diameter dimension less than the exterior diameter dimension of the clutch portion 16. In order to accommodate these diameter differences, the outer annular portion 24 is formed with an obtuse angular cross-sectional configuration so that it extends axially outwardly and radially inwardly from the outer end of the clutch portion 16 in coextensive relation therewith for a short distance and then axially outwardly in generally parallel relation with the inner portion 14.

As an added feature suitable for the particular application, the rotor 12 includes an annular grease guard portion 44. As shown, the grease guard portion 44 is disposed within the junction between the inner annular portion 14 and the clutch portion 16 and extends slightly axially therefrom.

As shown, the clutch 10 also includes an annular electromagnetic coil 46 which is fixed to the support provided by the compressor housing 36 by any suitable means such as bracket 48. The magnetic coil 46 is held in fixed relation within the space between the finished surfaces 28 and 30 of the rotor 12. The electromagnetic clutch 10 also includes an armature assembly, generally indicated at 50, which includes an annular mounting member 52 which is splined to the end of the compressor shaft 34 and fixedly secured thereon as by a bolt 54. The armature assembly 50 also includes an armature plate 56 which is connected with the armature mounting member 52 to rotate therewith and to have a limited amount of axial movement with respect thereto. This functional mounting of the armature plate 56 with the armature mounting member 52 is accomplished in the usual fashion by three resilient strap members 58 having opposite ends suitably pinned to the armature mounting member 52 and the armature plate 56.

In accordance with usual practice, the armature plate 56 includes a coupling surface 60 and a series of inner and outer arcuate slots 62 and 64 which are disposed in cooperating relation with respect to the series of arcuate slots 18, 20, and 22 in the rotor clutch portion 16 so that the magnetic flux generated by the magnetic coil 46 will be caused to flow in a flux path which extends between the clutch portion 16 and the armature plate 56 a plurality of times.

In accordance with the principles of the present invention, the end-to-end configuration of the inner and outer series of arcuate slots 18 and 22 are modified in a manner which enables the magnetic flux path to be extended between the rotor 12 and the armature plate 56 to a greater inner extent along the inner crossing path and to a greater outer extent along the outer crossing path which insures a greater torque-transmitting capability. To this end, the plurality of radially inner annularly spaced arcuate slots 18 extend through the annular clutch portion 16 from a first position at the coupling surface side thereof to a second position at an opposite side thereof in which the second position is disposed radially outwardly of the first position. Further, the plurality of radially outer annularly spaced arcuate slots 22 extend in one direction inwardly from the coupling surface side of the annular clutch portion 16 at a first position and extend outwardly to an opposite side of the annular clutch portion 16 in a different direction at a second position spaced radially inwardly of the first position.

When the electromagnetic coil 46 is energized, a magnetic field is established which creates a magnetic flux flow path from the magnetic coil 46 through the outer annular portion 24 of the rotor 12 past outer arcuate slots 22 and then onto the armature plate 56. Because of the outer slots 64 of the armature plate 56, the magnetic flux flows in a path back to the clutch portion 16 inwardly of the outer arcuate slots 22. The magnetic flux path continues until it reaches the intermediate arcuate slots 20 at which point it passes over to the armature plate 56 inwardly of the outer slots 64 therein. The inner slots 62 of the armature plate 56 cause the magnetic flux path to again cross over to the clutch portion 16 inwardly of the intermediate slots 20. Again, the inner arcuate slots 18 cause the magnetic flux path to again cross to the armature plate 56 below the inner slots 62. From the inner portion of the armature plate 56, the magnetic flux path is returned to the magnetic coil through clutch portion 16 and the inner portion 14. The manner in which the flux path is established between the rotor 12 and the armature plate 56 serves to move the armature plate axially so as to engage the armature coupling surface 60 with the rotor coupling surface 26. In this way, the rotary motion imparted to the rotor 12 by the serpentine belt 32 is transmitted to the compressor shaft 34.

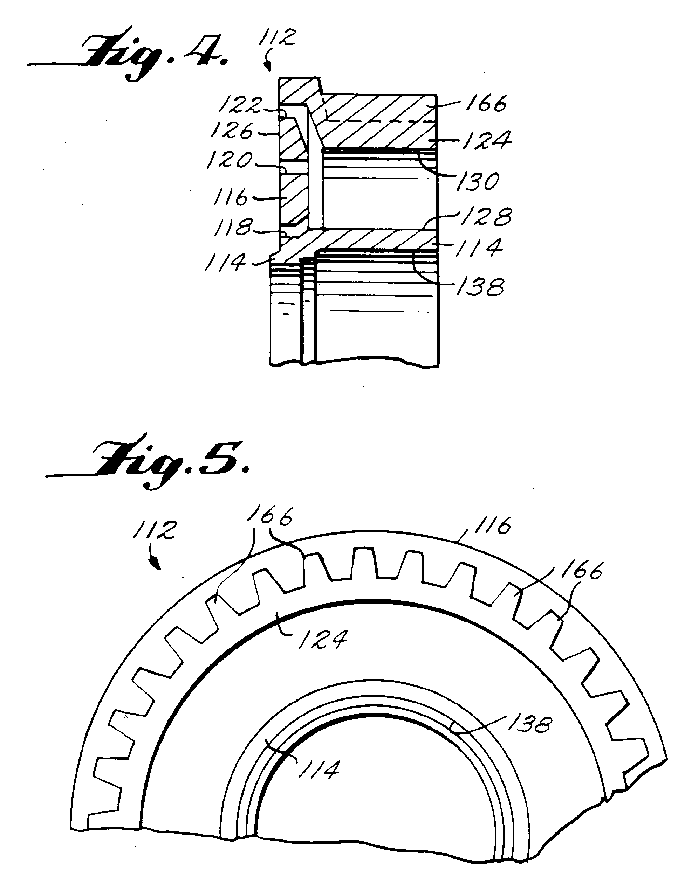

The configuration of the outer annular portion 24 can be varied depending upon the type of drive mechanism which interfaces therewith. For example, in Figures 4 and 5 there is shown a modified rotor 112 which is constructed in accordance with the principles of the present invention. The construction of the rotor 112 includes portions corresponding to those of the previously described rotor 12 and corresponding reference numerals have been applied where the configuration does not vary by simply adding the prefix "1" to the reference numerals. In Figure 4, the only change in configuration occurs in the exterior periphery of the axial extent of the outer annular portion 124. Thus, instead of the poly-V surface 42 previously provided, the exterior periphery of the end portion has a series of gear teeth 166 formed thereon. It will be understood that the gear teeth 166 could be formed on a separate annular member which is subsequently fixed to the remainder of the rotor.

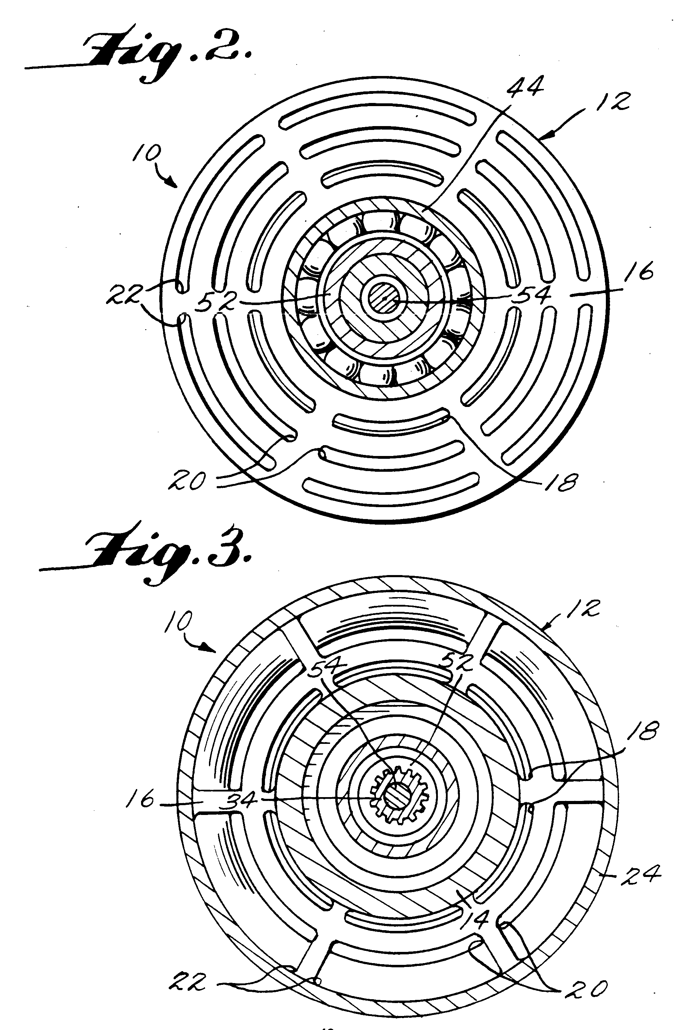

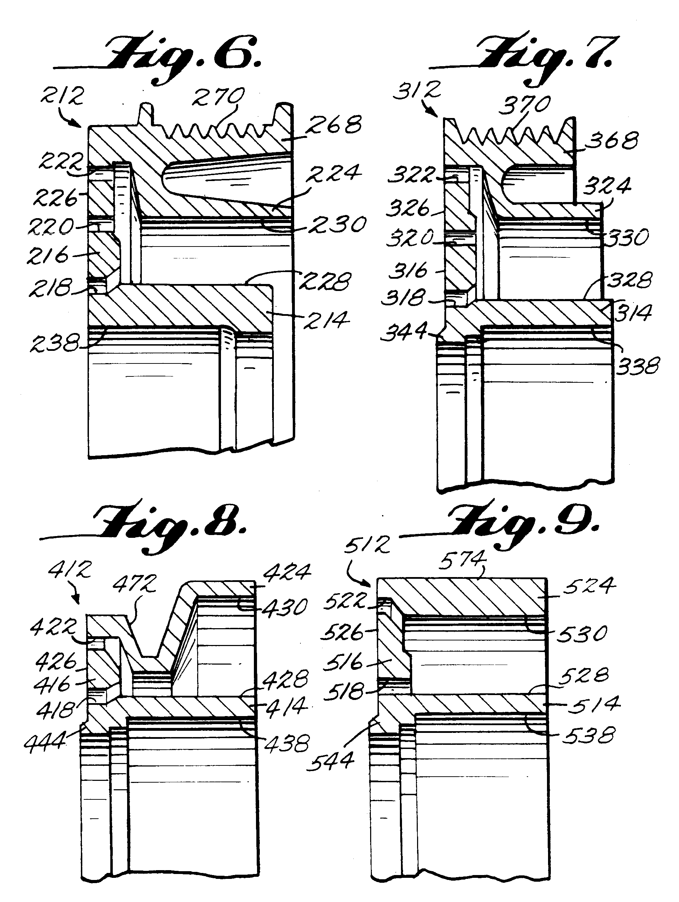

Figure 6 illustrates still another embodiment of a rotor 212 to which reference numerals corresponding to those used in conjunction with the rotor 12 of Figures 1-3 with the prefix "2" have been applied. Here again, the major change in the construction of the rotor 212 is in the outer annular portion 224, although it will be noted that the upper series of arcuate slots 222 extend straight through. To accommodate the straight through configuration, the initial coextensive extent of the outer annular portion 224 is spaced from the clutch portion 216 a greater distance. In the embodiment of Figure 6, the outer annular portion 224 includes an additional outer drive section 268 which is coextensive with the axial extent of the outer annular portion 224. As shown, the drive section 268 has its exterior periphery formed with poly-V groove surfaces 270 for cooperating with a poly-V belt. With this embodiment, a driving member of greater diameter than the one utilized in the embodiment of Figures 1-3 is provided. The embodiment of Figure 6 illustrates the optional nature of the integral grease guard portion which has been eliminated from this embodiment.

Figure 7 illustrates still another variation in the outer annular portion similar to the modification of Figure 6. In this embodiment, in which corresponding reference numerals are given the prefix "3", the outer annular portion 324 is provided with an added drive section 368 which has a shorter axial dimension than the added drive section 268. To accommodate this lesser axial dimension, the poly-V groove surfaces 370 extend to the junction with the clutch portion 316. It will be understood that it is within the contemplation of the present invention to provide an added section on the opposite side of the added drive section 368 so as to provide ample axial extent to the exterior periphery within which to form the drive surfaces.

Figure 8 discloses a rotor 412 in which corresponding reference numerals include the prefix "4". In this embodiment, the clutch portion 416 has a lesser axial extent than has been the case heretofore and the arcuate slots are of the four pole type with two fields so as to include only a plurality of inner annularly spaced arcuate slots 418 and a plurality of outer annularly spaced arcuate slots 422. In the embodiment shown in Figure 8, the outer annular portion 424 is modified to cooperate with a V-belt. In this embodiment, the configuration of the outer annular portion 424 is such that it initially extends axially outwardly and radially inwardly from the clutch portion 416 in coextensive relation therewith for a short distance, then extends axially outwardly a short distance, then extends axially outwardly and radially outwardly to a greater diameter dimension, after which it extends axially outwardly in parallel relation with the inner annular portion 424. The end result of this configuration is to provide an exterior V-groove 472 for drivingly receiving a V-belt.

Figure 9 illustrates still another variation in which corresponding reference numerals are given the prefix "5". In this embodiment, the clutch portion 516 is of the four pole type similar to the clutch portion 416 of Figure 8. Figure 9 illustrates an outer annular portion 524 which extends from the clutch portion 516 axially outwardly in parallel relation to the inner annular portion 514 throughout its extent. Nevertheless, as shown, the outer annularly spaced arcuate slots 52 have the angular end-to-end relationship previously described. The Figure 9 embodiment also illustrates that the inner annularly spaced arcuate slots 518 may extend straight through. In- the embodiment shown in Figure 9, the exterior surface of the outer annular portion 524 is a simple cylindrical surface 574 which is adapted to engage the opposite flat side of a poly-V belt. Clearly, the exterior peripheral configuration shown in Figure 9 could be modified to provide for a gear tooth such as shown in Figures 4-5, one or more V-belts such as shown in Figure 8, or the poly-V groove surfaces as shown in Figures 1, 6, and 7.

## Claims

1. An electromagnetic clutch comprising
a rotor (12) rotatable about a rotational axis,
an armature (50) operable to be magnetically coupled with said rotor for rotation therewith, and
a fixed annular magnetic coil (46) energizable to magnetically couple said rotor (12) and armature,
said rotor (12) including an inner annular portion (14), an annular clutch portion (16) extending outwardly from an end of said inner annular portion (14) and an outer annular portion (24) extending from an outer end of said clutch portion,
said annular clutch portion (16) including rotor coupling surface means (26) and a series of arcuate slots (18,20,22) extending from said coupling surface means (26) through said annular clutch portion (16),
said armature (50) including an armature plate (56) having armature coupling surface means (60) for engaging said rotor coupling surface means (26) and a series of arcuate slots (62,64) positioned in cooperating relation with respect to the series of arcuate slots (18,20,22) of said rotor clutch portion (16) so as to establish a magnetic flux path which passes back and forth between said rotor clutch portion and said armature plate a plurality of times,
said inner and outer annular portions (14,24) including opposed spaced annular surface means (28,30) for receiving said annular magnetic coil (46) therebetween so that when said magnetic coil is energized a magnetic flux field is established within magnetic flux paths within said inner and outer annular rotor portions (14,24) connecting with said magnetic flux path between said clutch portion (16) and said armature plate (56),
characterised in that said series of arcuate slots (18,20,22) includes a plurality of radially inner annular spaced arcuate slots (18) which extend through said annular clutch portion (16) from a first position (16A) at the coupling surface means side (26) thereof to a second position (16B) at an opposite side thereof in which said second position (16B) is disposed radially outwardly of said first position (16A),
the radially outermost extent (18A) of said inner arcuate slots (18) at said first position (16A) being spaced radially from the opposed annular surface means (28) of said inner annular portion (14) a radial distance less than the radial distance between the radially outermost extent (18A) and radially innermost extent (18B) of said inner arcuate slots (18) at said first position (16A).

2. An electromagnetic clutch as defined in claim 1 wherein said plurality of radially inner annularly spaced arcuate slots (18) extend from the coupling surface means side (26) of said annular clutch portion (16) at said first position generally in a direction parallel to said rotational axis and then extend to the opposite side of said annular clutch portion (16) at said second position in a direction with a component which is parallel to said rotational axis and a radially outward component.

3. An electromagnetic clutch as defined in claim 1 or 2 wherein said series of arcuate slots includes a plurality of radially outer annularly spaced arcuate slots (64) which extend from the coupling surface means side of said annular clutch portion (14) at a first position and extend to an opposite side of said annular clutch portion (14) at a second position spaced radially inwardly of said first position, the radial innermost extent of said outer arcuate slots (64) at said first position being radially outwardly of the opposed annular surface means (30) of said outer annular portion (24).

4. An electromagnetic clutch as defined in claim 1, 2 or 3 wherein said outer annular portion extends from the outer end of said clutch portion in an axially outward and radially inward direction in coextensive relation therewith for a short distance and then extends axially in parallel relation with said inner annular portion.

5. An electromagnetic clutch as defined in any preceding claim wherein said rotor is a one-piece casting of cast iron.

6. An electromagnetic clutch as defined in claim 5 wherein said cast iron is ferritic ductile cast iron.

7. An electromagnetic clutch assembly comprising
an electromagnetic clutch as defined in any preceding claim,
a fixed structure (36) of an automotive air conditioner compressor, a shaft (34) extending therefrom rotatable about an axis,
bearing means (40) carried by the fixed structure (36) and engaging an interior cylindrical surface (38) of said annular portion (14) for mounting said rotor (12) for rotation about an axis coincident with the axis of the compressor shaft (34),
said outer annular portion (24) having an exterior annular drive surface configuration (42) for drivingly cooperating with a driving element (32) for effecting rotation of said rotor (12),
said armature drivingly connecting with the compressor shaft (34) operable to be magnetically coupled with said rotor (12) for rotation therewith to drive the compressor shaft (34),
said fixed annular magnetic coil (46) being connected with the fixed structure (36) of the compressor and energizable to magnetically couple said rotor and armature.

8. An electromagnetic clutch as defined in claim 7 wherein said exterior annular drive surface configuration is a poly-V configuration.

9. An electromagnetic clutch as defined in claim 8 wherein said poly-V configuration is formed on an annular section fixed to the initial extent of said outer annular portion and extending axially in generally parallel relation to the axial extent of said outer annular portion.

10. An electromagnetic clutch as defined in claim 7 wherein said exterior annular drive surface configuration is a series of gear teeth.

11. An electromagnetic clutch as defined in any preceding claim wherein said rotor (12) includes an integral grease-guard portion (44) formed inwardly of the junction between said inner annular portion and said clutch portion and extending axially therefrom.

## Patentansprüche

1. Elektromagnetische Kupplung mit:
einem Rotor (12), der um eine Drehachse drehbar ist,
einem Läufer (50), welcher dazu betreibbar ist, magnetisch mit dem Rotor zur Drehung damit gekoppelt zu werden, und
einer feststehenden ringförmigen Magnetspule (46), welche mit Strom versorgbar ist, um den Rotor (12) und den Läufer magnetisch zu koppeln,
wobei der Rotor (12) einen inneren ringförmigen Bereich (14), einen ringförmigen Kupplungsbereich (14), welcher sich von einem Ende des inneren ringförmigen Bereichs (14) nach außen erstreckt, und einen äußeren ringförmigen Bereich (24) aufweist, der sich von einem äußeren Ende des Kupplungsbereichs aus erstreckt,
wobei der ringförmige Kupplungsbereich (16) Rotorkopplungsoberflächenmittel (26) und eine Folge von gekrümmten Schlitzen (18, 20, 22) aufweist, die von den Kopplungsoberflächenmitteln (26) durch den ringförmigen Kupplungsbereich (16) verlaufen,
wobei der Läufer (60) eine Läuferplatte (56) aufweist, welche Läuferkopplungsoberflächenmittel (60) zum Eingriff mit den Rotorkopplungsoberflächenmitteln (26) und eine Folge von gekrümmten Schlitzen (62, 64) hat, die in zusammenwirkender Beziehung in bezug auf die Folge von gekrümmten Schlitzen (18, 20, 22) des Rotorkupplungsbereichs (16) angeordnet sind, um einen Weg für magnetischen Fluß zu schaffen, der vielfach hin und her zwischen dem Rotorkupplungsbereich und der Läuferplatte verläuft,
wobei die inneren und äußeren ringförmigen Bereiche (14, 24) gegenüber und mit Abstand zueinander liegende ringförmige Oberflächenmittel (28, 30) zur Aufnahme der ringförmigen Magnetspule (46) dazwischen aufweisen, so daß, wenn die Magnetspule mit Strom versorgt wird, ein Feld von magnetischem Fluß in den Magnetflußwegen in den inneren und äußeren ringförmigen Rotorbereichen (14, 24) gebildet wird, das mit dem Magnetflußweg zwischen dem Kupplungsbereich (16) und der Läuferplatte (56) verbunden ist,
dadurch gekennzeichnet, daß die Folge von gekrümmten Schlitzen (18, 20, 22) eine Mehrzahl von radial inneren, ringförmig beabstandeten, gekrümmten Schlitzen (18) aufweist, die durch den ringförmigen Kupplungsbereich (16) verlaufen von einer ersten Position (16A) an der Seite der Kopplungsoberflächenmittel (26) zu einer zweiten Position (16b) an einer gegenüberliegenden Seite, wobei die zweite Position (16b) radial außerhalb der ersten Position (16a) liegt,
wobei die radial am weitesten außenliegende Ausdehnung (18a) der inneren gekrümmten Schlitze (18) an der ersten Position (16A) radial beabstandet ist von den gegenüberliegenden ringförmigen Oberflächenmitteln (28) des inneren ringförmigen Bereichs (14) um einen kleineren radialen Abstand als der radiale Abstand zwischen der radial am weitesten außenliegenden Ausdehnung (18A) und der radial am weitesten innenliegenden Ausdehnung (18B) der inneren gekrümmten Schlitze (18) an der ersten Position (16A).

2. Elektromagnetische Kupplung nach Anspruch 1, wobei die Mehrzahl der radial inneren, ringförmig beabstandeten, gekrümmten Schlitze (18) von der Seite der Kopplungsoberflächenmittel (26) des ringförmigen Kupplungsbereichs (16) an der ersten Position aus allgemein in einer Richtung parallel zur Drehachse verlaufen und dann zu der gegenüberliegenden Seite des ringförmigen Kupplungsbereichs (16) bei der zweiten Position in einer Richtung mit einer Komponente, welche parallel zu der Drehachse ist, und mit einer radial nach außen gerichteten Komponente verlaufen.

3. Elektromagnetische Kupplung nach Anspruch. 1 oder 2, wobei die Folge von gekrümmten Schlitzen eine Mehrzahl von radial äußeren, ringförmig beabstandeten, gekrümmten Schlitzen (64) aufweist, die von der Seite der Kopplungsoberflächenmittel des ringförmigen Kupplungsbereichs (14) von einer ersten Position aus verlaufen und sich zu einer gegenüberliegenden Seite des ringförmigen Kupplungsbereichs (14) zu einer zweiten Position erstrecken, die in radialem Abstand innerhalb der ersten Position liegt, wobei die radial am weitesten innenliegende Ausdehnung der äußeren gekrümmten Schlitze (64) an der ersten Position radial außerhalb der gegenüberliegenden, ringförmigen Oberflächenmittel (30) des äußeren ringförmigen Bereichs (24) liegt.

4. Elektromagnetische Kupplung nach Anspruch 1, 2 oder 3, wobei der äußere ringförmige Bereich sich von dem äußeren Ende des Kupplungsbereichs axial nach außen und radial nach innen gerichtet erstreckt in gleich ausgedehnter Beziehung damit über eine kurze Strecke und dann axial in paralleler Beziehung mit dem inneren ringförmigen Bereich verläuft.

5. Elektromagnetische Kupplung nach einem der vorhergehenden Ansprüche, wobei der Rotor ein einstückiges Gußteil aus Gußeisen ist.

6. Elektromagnetische Kupplung nach Anspruch 5, wobei das Gußeisen ferritisches Kugelgraphitgußeisen ist.

7. Elektromagnetische Kupplungsanordnung mit:
einer elektromagnetischen Kupplung nach einem der vorhergehenden Ansprüche,
einer feststehenden Struktur (36) eines Kraftfahrzeug-Klimaanlagen-Kompressors, einer Welle (34), die von dort ausgeht und um eine Achse drehbar ist,
Lagermitteln (40), die von der feststehenden Struktur (36) getragen werden und an einer inneren zylindrischen Oberfläche (38) des ringförmigen Bereichs (14) zum Tragen des Rotors (12) zur Drehung um eine mit der Achse der Kompressorwelle (34) zusammenfallenden Achse anliegen,
wobei der äußere ringförmige Bereich (24) eine äußere ringförmige Antriebsoberflächengestaltung (42) aufweist, um antriebsmäßig mit einem Antriebselement (32) zusammenzuwirken, um die Rotation des Rotors (12) zu bewirken,
wobei der antriebsmäßig mit der Kompressorwelle (34) verbundene Läufer dazu betreibbar ist, um magnetisch mit dem Rotor (12) zur Drehung damit gekoppelt zu werden, um die Kompressorwelle (34) anzutreiben,
wobei die feststehende ringförmige Magnetspule (46) mit der feststehenden Struktur (36) des Kompressors verbunden ist und mit Strom versorgbar ist, um den Rotor und den Läufer magnetisch zu koppeln.

8. Elektromagnetische Kupplung nach Anspruch 7, wobei die äußere ringförmige Antriebsoberflächengestaltung eine Keilrippengestaltung ist.

9. Elektromagnetische Kupplung nach Anspruch 8, wobei die Keilrippengestaltung auf einem ringförmigen Abschnitt fest an dem Beginn des äußeren ringförmigen Bereichs gebildet ist und sich axial in im wesentlichen paralleler Beziehung zur axialen Ausdehnung des äußeren ringförmigen Bereichs erstreckt.

10. Elektromagnetische Kupplung nach Anspruch 7, wobei die äußere, ringförmige Antriebsoberflächengestaltung eine Folge von Zähnen ist.

11. Elektromagnetische Kupplung nach einem der vorhergehenden Ansprüche, wobei der Rotor (12) einen einstückig angeformten Schmiermittelschutzbereich (44) aufweist, der innerhalb der Verbindung zwischen dem inneren ringförmigen Bereich und dem Kupplungsbereich gebildet ist und sich von da aus axial erstreckt.

## Revendications

1. Embrayage électromagnétique comportant:
un rotor (12) pouvant tourner autour d'un axe de rotation,
une armature (50) pouvant être actionnée de façon à être magnétiquement couplée audit rotor pour effectuer une rotation avec celui-ci, et
un enroulement magnétique annulaire fixe (46) pouvant être excité pour coupler magnétiquement ledit rotor (12) et ladite armature,
ledit rotor (12) comportant une partie annulaire intérieure (14), une partie d'embrayage annulaire (16) s'étendant vers l'extérieur à partir d'une extrémité de ladite partie annulaire intérieure (14) et une partie annulaire extérieure (24) s'étendant à partir d'une extrémité extérieure de ladite partie d'embrayage,
ladite partie d'embrayage annulaire (16) comportant des moyens formant surface de couplage de rotor (26) et une série de fentes en forme d'arc (18, 20, 22) s'étendant, à partir desdits moyens formant surface de couplage (26), à travers ladite partie d'embrayage annulaire (16),
ladite armature (50) comportant une plaque d'armature (56) comprenant des moyens formant surface de couplage d'armature (60) pour venir en prise avec lesdits moyens formant surface de couplage de rotor (26) et une série de fentes en forme d'arc (62, 64) positionnées en relation de coopération par rapport à la série de fentes en forme d'arc (18, 20, 22) de ladite partie d'embrayage de rotor (16) de façon à établir un chemin de flux magnétique qui va et vient une pluralité de fois entre ladite partie d'embrayage de rotor et ladite plaque d'armature,
lesdites parties annulaires intérieure et extérieure (14, 24) comportant des moyens formant surfaces annulaires espacées opposées (28, 30) pour recevoir ledit enroulement magnétique annulaire (46) entre eux, de telle sorte que, lorsque ledit enroulement magnétique est excité, un champ de flux magnétique soit établi à l'intérieur de chemins de flux magnétique à l'intérieur desdites parties de rotor annulaires intérieure et extérieure (14, 24) reliant par ledit chemin de flux magnétique ladite partie d'embrayage (16) et ladite plaque d'armature (56),
caractérisé en ce que ladite série de fentes en forme d'arc (18, 20, 22) comporte une pluralité de fentes en forme d'arc espacées annulaires radialement intérieures (18) qui s'étendent à travers ladite partie d'embrayage annulaire (16) d'une première position (16A) au niveau du côté des moyens formant surface de couplage (26) de celle-ci à une deuxième position (16B) au niveau d'un côté opposé de celle-ci, dans laquelle ladite deuxième position (16B) est disposée radialement à l'extérieur par rapport à ladite première position (16A),
l'extension radialement la plus à l'extérieur (18A) desdites fentes en forme d'arc intérieures (18) au niveau de ladite première position (16A) étant espacée radialement des moyens formant surface annulaire opposée (28) de ladite partie annulaire intérieure (14) d'une distance radiale inférieure à la distance radiale entre l'extension radialement la plus à l'extérieur (18A) et l'extension radialement la plus à l'intérieur (18B) desdites fentes en forme d'arc intérieures (18) au niveau de ladite première position (16A).

2. Embrayage électromagnétique selon la revendication 1, dans lequel ladite pluralité de fentes en forme d'arc espacées de façon annulaire et radialement intérieure (18) s'étendent à partir du côté des moyens formant surface de couplage (26) de ladite partie d'embrayage annulaire (16), au niveau de ladite première position, globalement dans une direction parallèle audit axe de rotation, puis s'étendent ensuite vers le côté opposé de ladite partie d'embrayage annulaire (16), au niveau de ladite deuxième position, dans une direction ayant une composante qui est parallèle audit axe de rotation et une composante qui se dirige radialement vers l'extérieur.

3. Embrayage électromagnétique selon la revendication 1 ou 2, dans lequel ladite série de fentes en forme d'arc comporte une pluralité de fentes en forme d'arc espacées de façon annulaire et radialement extérieures (64), qui s'étendent à partir du côté des moyens formant surface de couplage de ladite partie d'embrayage annulaire (14) au niveau d'une première position, et s'étendent vers un côté opposé de ladite partie d'embrayage annulaire (14) au niveau d'une deuxième position espacée radialement vers l'intérieur par rapport à ladite première position, l'extension radiale la plus à l'intérieur desdites fentes en forme d'arc extérieures (64) au niveau de ladite première position étant située radialement à l'extérieur par rapport aux moyens formant surface annulaire opposée (30) de ladite partie annulaire extérieure (24).

4. Embrayage électromagnétique selon la revendication 1, 2, ou 3, dans lequel ladite partie annulaire extérieure s'étend à partir de l'extrémité extérieure de ladite partie d'embrayage, dans une direction axialement vers l'extérieur et radialement vers l'intérieur, en relation d'étendue commune avec celle-ci sur une courte distance, puis s'étend axialement en relation parallèle avec ladite partie annulaire intérieure.

5. Embrayage électromagnétique selon l'une quelconque des revendications précédentes, dans lequel ledit rotor est constitué d'un moulage d'une seule pièce en fonte.

6. Embrayage magnétique selon la revendication 5, dans lequel ladite fonte est de la fonte ductile ferritique.

7. Ensemble d'embrayage électromagnétique comportant:
un embrayage électromagnétique selon l'une quelconque des revendications précédentes,
une structure fixe (36) de compresseur de climatiseur pour automobile, un arbre (34) s'étendant à partir de celle-ci de façon à pouvoir tourner autour d'un axe,
des moyens formant palier (40) portés par la structure fixe (36) et venant en prise avec une surface cylindrique intérieure (38) de ladite partie annulaire (14) pour le montage dudit rotor (12) pour permettre la rotation autour d'un axe coïncidant avec l'axe de l'arbre de compresseur (34),
ladite partie annulaire extérieure (24) ayant une configuration de surface d'entraînement annulaire extérieure (42) pour coopérer en entraînement avec un élément d'entraînement (32) afin de provoquer la rotation dudit rotor (12),
ladite armature connectée en entraînement à l'arbre de compresseur (34) pouvant être actionnée de façon à être couplée magnétiquement audit rotor (12) pour effectuer une rotation avec celui-ci afin d'entraîner l'arbre de compresseur (34),
ledit enroulement magnétique annulaire fixe (46) étant connecté à la structure fixe (36) du compresseur et pouvant être excité de façon à coupler magnétiquement ledit rotor et ladite armature.

8. Embrayage électromagnétique selon la revendication 7, dans lequel ladite configuration de surface d'entraînement annulaire extérieure est une configuration en V multiple.

9. Embrayage électromagnétique selon la revendication 8, dans lequel ladite configuration en V multiple est formée sur une section annulaire fixée à l'étendue initiale de ladite partie annulaire extérieure, et s'étendant axialement en relation globalement parallèle à l'étendue axiale de ladite partie annulaire extérieure.

10. Embrayage électromagnétique selon la revendication 7, dans lequel ladite configuration de surface d'entraînement annulaire extérieure est une série de dents d'engrenage.

11. Embrayage électromagnétique selon l'une quelconque des revendications précédentes, dans lequel ledit rotor (12) comporte une partie de garde-graisse d'une seule pièce (44) formée à l'intérieur de la jonction entre ladite partie annulaire intérieure et ladite partie d'embrayage et s'étendant axialement à partir de celle-ci.
